# EUROPEAN PATENT APPLICATION

(11) **EP 2 253 205 A1**
(43) Date of publication of application: **24.11.2010**
(21) Application number: 10250716.7
(22) Date of filing: 01.04.2010
(51) Int. Cl.: A01K 97/12

(54) **A fish-bite indicator**

(30) Priority: 12.05.2009 GB 0908125
(71) Applicant: Fox International Group Limited, Hainault, Essex IG6 3UT (GB)
(72) Inventor: Little, Mark, Billericay, Essex CM12 9QY (GB)
(74) Representative: Crouch, David John

(57) **Abstract**

A fish-bite indicator (10) having an arm (20) which is pivoted to an attachment device (16) of the indicator (10) at one end. The arm is provided with an indicator head (30) at its other end. The head (30) is provided with a line engagement mechanism (36 and 44 to 50) which is so constructed that it retains a fishing line (70) when in use but releases the latter when a strike is made. The line engagement mechanism (36 and 44 to 50) has a movable member (36) which is movable relative to the head (30) to effect such release. The head (30) is pivotably mounted on the arm (20) and the movable member (36) is coupled to the arm (20) by way of an arm coupling device (54 to 64) to release the line (70) when the head (30) is at or beyond a predetermined angular position relative to the arm (20).

## Description

The present invention relates to a fish-bite indicator having an arm which is pivoted to an attachment device of the indicator at one end and which is provided with an indicator head at the other, the head being provided with a line engagement mechanism which is so constructed that it retains a fishing line when in use but releases the latter when a strike is made, the line engagement mechanism having a movable member which is movable relative to the head to effect such release.

In a previously proposed such construction, the line engagement mechanism includes a gate which opens in a predetermined direction such that such a line will only urge the gate in the correct direction when the latter is at a certain angle relative to the horizontal.

A disadvantage of such a construction is that the line might still become snagged on parts of the gate device.

The present invention seeks to provide a remedy.

Accordingly, the present invention is directed to a fish bite indicator having the construction set out in the opening paragraph of the present specification, **characterised in that** the head is pivotably mounted on the arm and in that the movable member is coupled to the arm by way of an arm coupling device to release the line when the head is at or beyond a predetermined angular position relative to the arm.

An advantage of such a construction is that it will retain even a very thin fishing line or braid.

Preferably the movable member is spring biassed towards a predetermined position. This simplifies this operation.

Preferably the spring biassing is effected by a compression spring of the indicator. This provides a simple means of spring biassing.

Preferably the said predetermined position is the position in which such a line is retained by the line engagement mechanism. This provides a fail-safe retention of the line.

In one preferred construction, the line engagement mechanism comprises a loop through which a part of the movable member extends when the latter is in its retaining position. This provides a simple construction by which the line engagement mechanism is able to retain such a line.

Preferably the head is provided with two abutment portions which limit the range of angular positions which can be adopted by the head relative to the arm. This provides a simple construction to avoid entanglement of the indicator by the line.

Preferably the movable member is elongate and is provided with a slot extending along its length which is engaged by a spigot coupled to the adjacent end of the arm. This provides a degree of freedom of movement of the arm without causing release of the line, to inhibit undesirable release of the line by relatively small pivotal movements of the arm.

Preferably the spigot is part of a rocker of the indicator, on one side of a pivotal attachment of that rocker to the head, part of the rocker which is on the other side of that pivot being in abutment with a portion of, or fixed to, the adjacent end of the arm.

An example of a fish-bite indicator made in accordance with the present invention will now be described in greater detail with reference to the accompanying drawings, in which:
- Figure 1: is a side view of a fish-bite indicator embodying the present invention;
- Figure 1a: shows a part of the indicator shown in Figure 1 engaging a fishing line;
- Figure 2: shows on a larger scale a part of the indicator shown in Figure 1 with portions removed to reveal with greater clarity the remaining portions;
- Figure 3: shows on a smaller scale a view of the fish-bite indicator shown in Figures 1 and 2, from the other side relative to Figure 1, and with portions thereof removed for the sake of clarity, with the indicator in a first position;
- Figure 4: shows a further side view of the indicator shown in Figures 1 and 2, corresponding to the view shown in Figure 3, but with the indicator in a second position;
- Figure 5: shows on a larger scale a part of the indicator shown in Figures 1 to 4 with portions removed therefrom to reveal the remaining portions, with the relative positions thereof being as they are with the indicator in the position shown in Figure 3; and
- Figure 6: shows on a larger scale a part of the indicator shown in Figures 1 to 4 with portions removed therefrom to reveal the remaining portions, with the relative positions thereof being as they are with the indicator in the position shown in Figure 4.

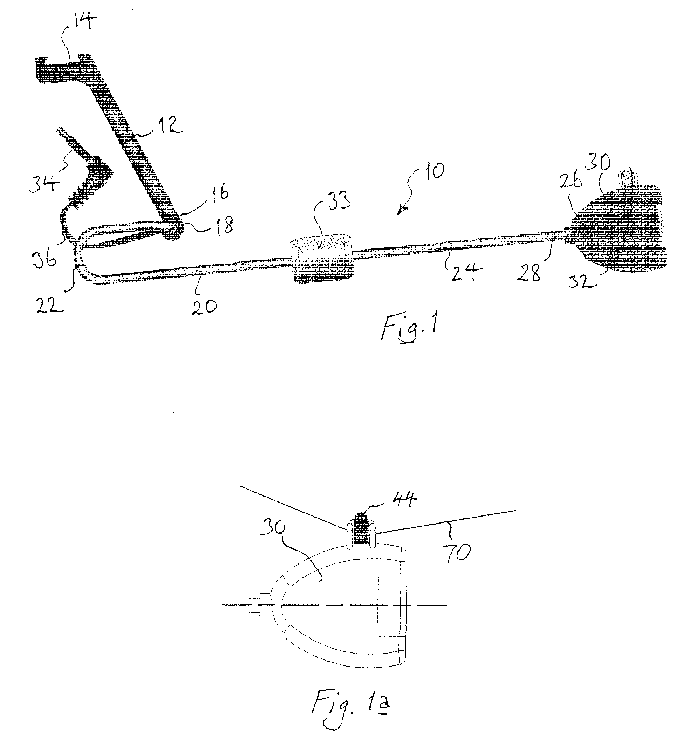

A fish-bite indicator 10 shown in Figures 1 to 6 comprises an attachment device 12. The latter is formed at one end with half of a dovetail joint 14, the other half of which may be fixed to a bankstick or other support. The other end of the attachment device 12 provides a pivot 16 to which is pivotally connected one end 18 of a tubular arm 20. This arm extends in an intended rearward direction from the pivot 18 whereafter it bends through a 180° arc 22 and then in an intended forward direction into a straight length 24 of the arm 20. A pivot bearing cap 26 is attached to the intended forward end 28 of this straight section 24 of the arm 20.

An indicator head 30 made of a synthetic plastics material is pivotally attached to the pivot bearing cap 26 so as to be pivotable about the front end 28 of the arm 20 in an imaginary intended generally vertical plane that includes the arm 20. The head 30 is hollow and incorporates a light emitting device 32 which may be connected to a power source (not shown) via a plug 34 connected to the light 32 by way of a cable 36 which extends within the tubular arm 20.

A weight 33 is held slidably on the arm 20 with friction material (not shown) ensuring that the weight 33 will remain in the position on the arm 20 to which it is slid by a force sufficient to overcome the friction.

Within the hollow head 30 is also provided a movable member in the form of an elongate plunger 36, a lower end 38 of which is engaged by a helical spring 40 restrained in position by a receptacle 42. The compression spring 40 urges the plunger 36 in an intended upward direction. The plunger 36 extends transversely of the arm 20 in a generally upward direction from the helical spring 30 to its upper end 44 which projects upwardly from the head 30 within a wire loop 46. This wire loop 46 comprises two short upright portions 48 and a slanting U-shaped portion 50, the arms of which extend from the upright portions 48.

The generally upright plunger 36 is constrained to move in an upward or downward direction by internal walls 52 of the head 30.

The plunger 36 is provided with a longitudinally extending through-slot 54. An elongate spigot 56 of a rocker 58 extends in an intended generally horizontal direction through the slot 54. The rocker 58 is pivoted at an internal pivot 60 of the head 30. A further elongate portion 62 of the rocker 58 extends at an obtuse angle to the spigot 56 downwardly to a position where it abuts a protuberance 64 which extends in an intended forward direction of the indicator from the cap 26.

Abutments 66 and 68 of the head 30 limit the extent to which the head 30 can pivot about the cap 26. When the head 30 extends in a forward direction, the abutment 68 rests against a portion of the cap 26 and an imaginary line passing through the loop 46 and the centre of the cap 26 makes a generally obtuse angle with the arm 20.

It will be seen that the helical spring 40 urges the plunger 36 into a position in which the end 44 of the plunger 36 extends through the loop 46.

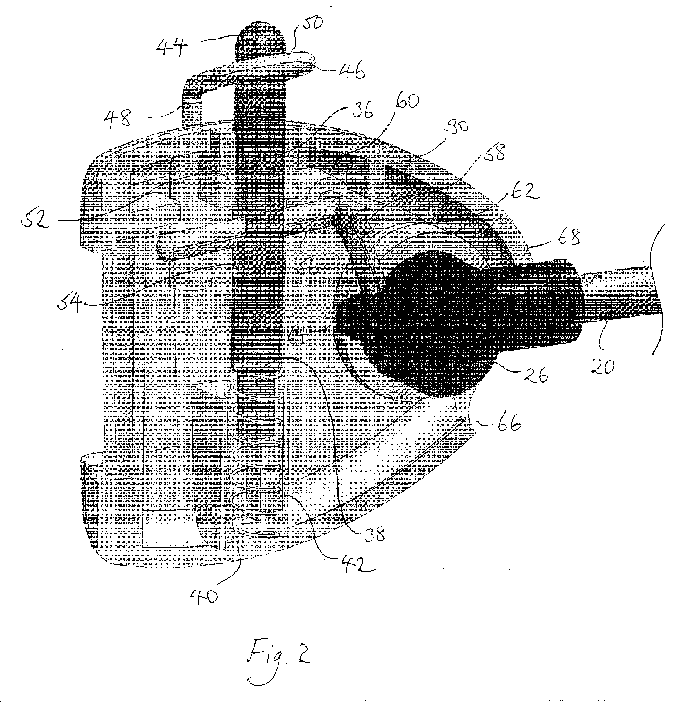

When the fish-bite indicator shown in Figures 1 to 6 is installed for use, the attachment device 12 is attached to a pivotal mount on a bankstick (not shown) and the plug 34 is plugged into the socket (not shown) of a power source (not shown). The head 30 is cocked downwardly relative to the arm 20. As a result the protuberance 64 as viewed in Figure 2 urges the elongate portion 62 of the rocker 58 in an anticlockwise direction relative to the head 30. The spigot 56, being formed integrally with the elongate part 62, also rotates in an anticlockwise sense as viewed in Figure 2 so that it abuts the bottom end of the slot 54 and then urges the plunger 36 downwardly against the restoring force of the helical spring 40. As a result, the end 44 of the plunger 36 is retracted into the head 30 clear of the loop 50. A fishing line 70, extending in a generally horizontal direction generally parallel to the arm 20, may now be inserted underneath the loop 50, as shown in Figure 1a. The head 30 may now be rotated back to the position it has as shown in Figure 1 so that the plunger 36 returns to its retaining position as shown in Figures 1, 1a and 2, to retain the line as shown in Figure 1a.

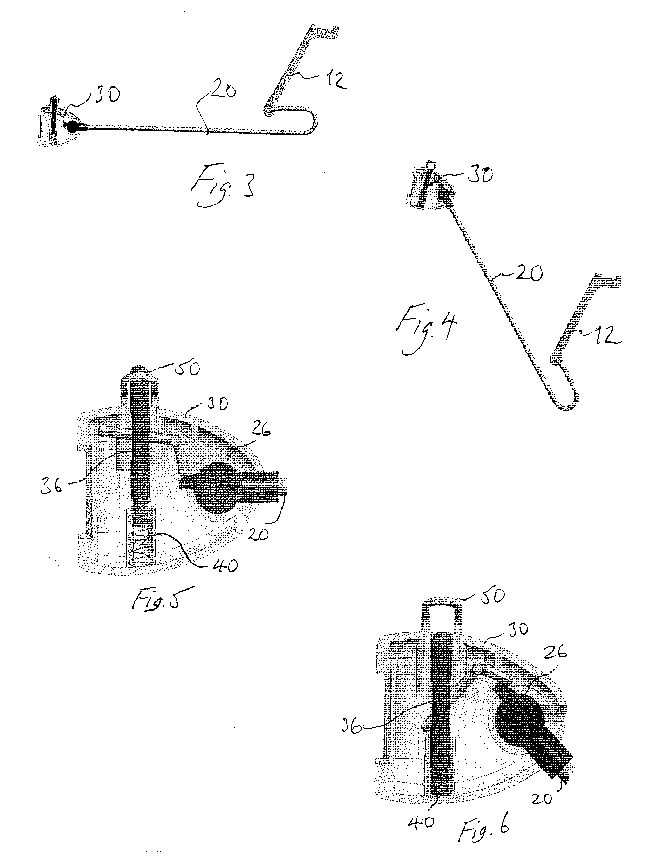

The indicator may now adopt the position it has in Figure 3. Any increase in tension in the line will lift the head 30 as the arm 20 pivots or swings about the pivot of the cap 26, whereas any slackening of the line 70 will cause the head 30 to drop.

If a strike is made, so that the rod (not shown) and with it the line 70 is raised upwardly with force, the indicator adopts the position it has as shown in Figure 4. Because of the much increased tension in the line 70 upon making the strike, the loop 50 is pulled into alignment with the arm 20 so that the head 30 is now cocked downwardly relative to the arm 20 so that the line 70 is released as the plunger 36 is retracted into the head 30 in the manner already described.

Numerous variations and modifications to the illustrated indicator may occur to the reader without taking the indicator outside the scope of the present invention. To give one example, instead of the rocker 58, retraction of the plunger 36 may be effected by means of a flexible elongate member extending downwardly from the protuberance 64, through a hole in the bottom of the receptacle 42 and then upwardly to a point of attachment to the lower end of the plunger 36.

## Claims

1. A fish-bite indicator (10) having an arm (20) which is pivoted to an attachment device (16) of the indicator (10) at one end and which is provided with an indicator head (30) at the other, the head (30) being provided with a line engagement mechanism (36 and 44 to 50) which is so constructed that it retains a fishing line (70) when in use but releases the latter when a strike is made, the line engagement mechanism (36 and 44 to 50) having a movable member (36) which is movable relative to the head (30) to effect such release, **characterised in that** the head (30) is pivotably mounted on the arm (20) and **in that** the movable member (36) is coupled to the arm (20) by way of an arm coupling device (54 to 64) to release the line (70) when the head (30) is at or beyond a predetermined angular position relative to the arm (20).

2. A fish-bite indicator according to claim 1, **characterised in that** the movable member (36) is spring biased towards a predetermined position.

3. A fish-bite indicator according to claim 2, **characterised in that** the spring biasing is effected by a compression spring (40) of the indicator (10).

4. A fish-bite indicator according to any preceding claim, **characterised in that** the said predetermined angular position is the position in which such a line (70) is retained by the line engagement mechanism (36 and 44 to 50).

5. A fish-bite indicator according to any preceding claim, **characterised in that** the line engagement mechanism (36 and 44 to 50) comprises a loop (46) through which a part of the movable member (36) extends when the latter is in its retaining position.

6. A fish-bite indicator according to any preceding claim, **characterised in that** the head (30) is provided with two abutment portions (66 and 68) which limit the range of angular positions which can be adopted by the head (30) relative to the arm (20).

7. A fish-bite indicator according to any preceding claim, **characterised in that** the movable member (36) is elongate and is provided with a slot (54) extending along its length which is engaged by a spigot (56) coupled to the adjacent end of the arm (20).

8. A fish-bite indicator according to claim 7, **characterised in that** the spigot (56) is part of a rocker (26 and 56 to 62) of the indicator (10), on one side of a pivotal attachment of that rocker to the head (30), part of the rocker which is on the other side of that pivot being in abutment with a portion of, or fixed to, the adjacent end of the arm (20).
